(19) Europäisches Patentamt
European Patent Office
Office européen des brevets

(11) **EP 4 586 482 A1**

(12) **EUROPEAN PATENT APPLICATION**

(43) Date of publication:
**16.07.2025 Bulletin 2025/29**

(21) Application number: **24151171.6**

(22) Date of filing: **10.01.2024**

(51) International Patent Classification (IPC):
**H02M 1/32** (2007.01)     **H02M 7/483** (2007.01)
**H02M 1/00** (2006.01)

(52) Cooperative Patent Classification (CPC):
**H02M 7/4835; H02M 1/32;** H02M 1/0064

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
• **Chen, Nan**
**722 10 Västerås (SE)**
• **Montero Robina, Pablo**
**41005 Sevilla (ES)**
• **Johannesson, Daniel**
**722 31 Västerås (SE)**

(74) Representative: **AWA Sweden AB**
**Box 5117**
**200 71 Malmö (SE)**

(54) **SPLIT CAPACITOR CONVERTER SUBMODULE**

(57)     The present disclosure relates to a cell (1) for a Modular Multilevel Converter, MMC, system. The cell 1 comprises: a first cell connection terminal (CCT1); a second cell connection terminal (CCT2); a first split cell module (SCM1) and at least a second split cell module (SCM2), the first split cell module (SCM1) adapted with a first capacitor module (CM1) in a capacitor position and a first upper position switch module (USM1) in an upper switch position; one or more of said at least a second split cell module (SCM2) adapted with a second capacitor module (CM2) in a capacitor position and a second upper position switch module (USM2) in an upper switch position, the cell (1) further comprising: at least one first inductive element (IE1); at least one second inductive element (IE2); a lower position switch module (LSM1, LSM2), the at least one first inductive element (IE1), the first upper position switch module (USM1), and the first capacitor module (CM1) are in a first branch (B1) between the first cell connection terminal (CCT1) and the second cell connection terminal (CCT2), one or more of the at least one second inductive element (IE2), the second upper position switch module (USM2), and the second capacitor module (CM2) are in a second branch (B2) between the first cell connection terminal (CCT1) and the second cell connection terminal (CCT2), the lower position switch module (LSM1, LSM2) is arranged in an auxiliary branch (B1', B2') in parallel with at least a portion of the first branch (B1) and/or the second branch (B2). A MMC-system and a method of controlling a cell in a MMC-system is also disclosed.

Fig. 1

EP 4 586 482 A1

**Description**

Technical Field

The present disclosure relates to a cell for a Modular Multilevel Converter, MMC, system, and a MMC-system comprising the same, and a method of controlling a cell in an MMC-system.

Background

MMC (modular multilevel converter) cells are designed to withstand various fault conditions to ensure continuous operation of High-Voltage Direct Current, HVDC, systems. One of the most stressful failure events is shoot-through failure. This failure event occurs when semiconductor devices of the MMC are in an ON status (turned ON or in ON status due to failure) at the same time and forms a shortcircuit path with the capacitors of the MMC cells. Alternatively, this event occurs when an upper position switch and a mechanical bypass switch is conducting at the same time. The capacitor discharge current through the components may, depending on configuration, reach in the order of 1000 kA or above and provides a large electrical and mechanical stress to the MMC cell components, e.g., bypass switch, semiconductor package/frame, busbars and other components. Because of this, the components of conventional MMC cells need robust design and high design requirements to withstand shoot-through current failure events. This in turn increases manufacturing cost of individual components which in turn makes maintenance expensive whenever a component needs to be replaced.

Summary

It is an object of the present disclosure to provide a solution which alleviates at least some of the problems of prior art solutions. A first object of the disclosure is to provide a solution which reduces component stress in a cell experiencing a shoot-through failure event. The first object is solved by the disclosure according to claim 1. A second object of the disclosure is to provide a solution which reduces or eliminates shoot-through current in a cell. The second object of the disclosure is solved by the disclosure according to claim 1. A third object of the disclosure is to provide a solution which allows for improved modularity. The third object is solved by the disclosure according to claim 1. Preferred embodiments are defined in the dependent claims. Further advantageous embodiments and advantages thereof are described in the following.

A shoot-through current peak is related to the stored capacitor energy which is increased by a larger capacitor voltage and/or current, as indicated by the following formula:

$$E = \frac{1}{2}CV^2,$$

where $E$ is energy stored, $C$ is capacitance and $V$ is capacitor voltage, wherein C is proportional to V as $C \sim 1/V$ and $V$ is proportional to $I$ as $V = RI$ according to Ohm's law. It can thereby be seen that a further increase in voltage $V$ or current $I$ will result in a larger capacitor energy, and consequently a larger shoot-through current peak during a shoot-through failure event. With an increased shoot-through failure current, the cell components will experience higher stress and for this reason the cell components will need to be designed for higher requirements.

The disclosure is based on the inventor's realization that the shoot-through failure current can be reduced by dividing a cell capacitor into a plurality of smaller capacitors in at least two branches in a parallel configuration. By this, if a shoot-through failure occurs in a first branch, then only the capacitor in that first branch will discharge and contribute to the shoot-through failure current, while the capacitor in the second branch can operate nominally (or as invention according to the disclosure incorporates, the discharge can be limited by extra inductive component). If $n$ capacitors $C_s$ are connected in parallel, they add to $nC_s$, thus the total energy $E$ is

$$E = \frac{1}{2}nC_sV^2,$$

from which it can be seen that one large capacitor C can be replaced by $n$ smaller capacitors Cs in parallel configuration and still be able to store the same amount of energy.

The disclosure is further based on the inventor's realization that the cell can incorporate one or more inductive elements to electrically balance the at least two branches in parallel configuration.

A solution according to the disclosure can be realized in a number of different inventive aspects and related embodiments thereof such as a cell, a MMC system incorporating such a cell, and a method of controlling a cell in a MMC system. By an invention in accordance with the disclosure, it is possible to reduce the shoot-through current, which may bring benefits such as:

- relaxed requirements on cell components (such as bypass switch, switch modules, support frame for supporting cell components, busbars, and other parts);
- increase of submodule rating (i.e., higher voltage, current, and/or power handling capability);
- asymmetric cell design: the cell allows for different power semiconductor modules (material/type/rating) for upper switch position and lower switch position which enables semiconductor area optimization, based on uneven power loss distribution in half-bridge structure.

- scalability depending on system requirements;
- less maintenance effort compared to conventional designs.

According to a first aspect of the disclosure, a cell for a Modular Multilevel Converter, MMC, system is provided. The cell comprises: a first cell connection terminal; a second cell connection terminal; a first split cell module and at least a second split cell module, the first split cell module and the at least a second split cell module adapted with a half-bridge configuration or a full-bridge configuration defining one or more upper switch positions, one or more lower switch positions, and one or more capacitor positions. The first split cell module is adapted with a first capacitor module in a capacitor position and a first upper position switch module in an upper switch position. One or more of said at least a second split cell module is/are adapted with a second capacitor module in a capacitor position and a second upper position switch module in an upper switch position. The cell further comprises: at least one first inductive element; at least one second inductive element; a lower position switch module. The at least one first inductive element, the first upper position switch module, and the first capacitor module are in a first branch between the first cell connection terminal and the second cell connection terminal. One or more of the at least one second inductive element, the second upper position switch module, and the second capacitor module are in a second branch between the first cell connection terminal and the second cell connection terminal. The lower position switch module is arranged in an auxiliary branch in parallel with at least a portion of the first branch and/or the second branch.

The cell above advantageously distributes cell capacitance into parallel capacitor modules. When the present cell is designed to store the same amount of total energy as a conventional cell with only one branch, each parallel capacitor module needs to hold less energy. This advantageously limits shoot-through current peak of shoot-through current as follows. If an upper position switch module in a branch fails, then the capacitor energy of the capacitor module in the same branch may be discharged as shoot-through current. However, due to the cell comprising parallel branches, a capacitor module in a parallel branch will not contribute to the shoot-through current since the upper position switch module in the same parallel branch is still operational and can limit the discharge current. Further, by arranging an inductive element in each branch, it advantageously allows for balancing of charging current and capacitor voltages between branches. Thereby, stable cell operation may advantageously be achieved even with the use of a split cell configuration with parallel branches. The inductive elements may advantageously help in limiting a shoot-through current peak in the present cell since the inductive elements limit a change in current *(di/dt)*. The present cell thereby advantageously both balance current flow and voltages between branches and further limits shoot-through current peaks with the same components.

As such, in the event of a failure, the cell limits shoot-through current as compared to a conventional cell. By reducing shoot-through current peak, design requirements of other cell components may be advantageously significantly relaxed. This in turn allows for use of cheaper components in a cell, which results in the design of a more complex cell configuration (i.e., implementation of more components than conventional cells) and/or reduced BOM costs. Moreover, by reducing the shoot-through current, the power rating of the cell is no longer limited by design limitations of other cell components, and can advantageously be increased to higher power ratings than that of conventional cells with the same energy storage capability.

A positive effect of current balancing can be achieved with at least small inductive elements, i.e., the inductive elements designed to provide at least a small inductance. One or more inductive elements may be designed to provide an inductance selected from an interval of 50 nH to 100 nH, 100 nH to 200 nH, 200 nH to 300 nH, 300 nH to 400 nH, 400 to 500 nH, or 500 nH or more. Each inductive element may be designed to provide an inductance selected from any above intervals. The first inductive element and the at least second inductive element may be designed to have substantially the same inductance. The first inductive element and the at least second inductive element may be designed so that a desired current flow balancing in the first branch and the at least second branch is achieved.

The present cell advantageously also allows for improved modularity of a MMC system. The cell can be configured with more than two split cell modules depending on application. Each split cell module may be designed with increased complexity since cell component requirements are relaxed due to the cell's ability to limit shoot-through current peaks. The present cell advantageously allows for either half-bridge configuration or full-bridge configuration.

The present cell, with its split cell configuration, can cooperate with other cells of similar design to enable use of a desired power rating. Due to the split cell configuration, other expensive and/or large components otherwise required can be reduced in size and/or removed, which in turn can allow for cost savings and overall reduced footprint saving.

According to one embodiment, the first inductive element is arranged between the first cell connection terminal and the first upper position switch module, and one of the at least one second inductive element is arranged between the first cell connection terminal and the second upper position switch module, and/or the first inductive element is arranged between the second cell connection terminal and the first capacitor module and one of the at least one second inductive element is arranged between the second cell connection terminal and the second capacitor module. Two or more inductive elements may be arranged in their respective branches between the first cell connection terminal and the respective upper position switch module. Two or more inductive elements may be arranged in their respective branches between the second cell connection terminal and the respective capacitor module. Two or more inductive elements may be arranged in their respective branches between the first cell connection terminal and the respective upper position switch module while two or more inductive elements may be arranged in their respective branches between the second cell connection terminal and the respective capacitor module. Two or more inductive elements may be arranged in the same manner in respective branches. The present cell is thereby advantageously flexible in terms of where the inductive elements are arranged. The choice of configuration of inductive elements may depend on practical design choice.

According to one embodiment, the first split cell module and/or the at least second split cell module comprises two or more switch modules in a half-bridge configuration or a full-bridge configuration with at least one switch module in a upper switch position and with at least one switch module in a lower switch position. The first split cell module may be adapted with half-bridge configuration. The first split cell module may be adapted with full-bridge configuration. One or more split cell modules of the at least second split cell module may be adapted with half-bridge configuration. One or more split cell modules of the at least second split cell module may be adapted with full-bridge configuration. The first split cell module and/or any split cell module of the at least second split cell module may comprise an according number of upper position switch modules and lower position switch modules depending on whether the split cell modules are adapted with half-bridge configuration or full-bridge configuration.

According to one embodiment, the cell comprises: a voltage balancing component connected between the first split cell module and the at least second split cell module. The voltage balancing component may be connected between positive terminals of the capacitor modules of the first split cell module and the at least second split cell module. The voltage balancing component may advantageously contribute to balance out capacitor voltage differences. The cell may comprise a plurality of voltage balancing components. One voltage balancing component may be connected between two split cell modules. One voltage balancing component may be connected between positive terminals of two capacitor modules, one from a first split cell module and one from a second split cell module. Any voltage balancing component included in the cell may be connected as herein detailed.

According to one embodiment, said voltage balancing component includes one of a resistor, a fuse, or a combination thereof. One voltage balancing component or two or more voltage balancing components may include one of a resistor, a fuse, or a combination thereof. In case of a resistor, the resistor is selected with a resistance which ensures sufficient voltage balancing of capacitor modules. Moreover, the resistance (and/or power rating) can be chosen to limit a current discharge from other branch capacitor modules. In case of a fuse, the fuse will disrupt the circuit at a larger current flow between branches, such as during a shoot-through current failure event, thereby isolating the branch experiencing a shoot-through current failure event from other branches. In case of a resistor in combination with a fuse, the voltage balancing component can both allow for voltage balancing during normal operations and also allow for disconnection of a branch experiencing a shoot-through current failure event from other branches. Due to the split cell module configuration of the cell, the voltage balancing components can provide satisfactory effect even when rated for relatively lower currents. The implementation of low-rated balancing components and/or fuses advantageously enables less strict mechanical design requirements.

According to one embodiment, an auxiliary inductive element connected between two parallel capacitor modules in the same split cell module. One split cell module or more split cell modules of the present cell may be adapted with two or more capacitor modules in respective capacitor module branches. In such cases, it is advantageous to limit shoot-through current between capacitor module branches in the same split cell module. By including an auxiliary inductive element between two capacitor modules in respective capacitor module branches in the same split cell module, a shoot-through current is limited. The auxiliary inductive element advantageously also allows for current balancing between the two subbranches.

According to one embodiment, the cell comprises: at least a third split cell module, each adapted with a capacitor module in a capacitor position and an upper position switch module, at least a third inductive element, wherein the at least third inductive element, the third upper position switch module, and the at least third capacitor module are in a third branch between the first cell connection terminal and the second cell connection terminal. The cell may be adapted with two split cell modules, or three or more split cell modules. Any split cell modules may be adapted as the first split cell module or as the at least second split cell module detailed previously.

According to one embodiment, the cell comprises: at least a second lower position switch module arranged in a lower switch position, wherein the first lower position switch module and the at least a second lower position switch module are in series connection or in parallel connection.

The cell may be adapted with one lower position switch module which is shared by two or more split cell modules. In such a case, the lower position switch module may include one high power switch module. Depending on application and number of split cell modules in the present cell, it may save space. However, if space requirements are more relaxed, then two or more split cell modules may be adapted with a respective lower position switch module in parallel. Each split cell module may be adapted with a lower position switch module, which together forms a set of parallel lower position switch modules. An advantage of a set of parallel lower position switch modules is that each individual lower position switch module can be rated for lower power, thereby relaxing requirements further and reduce costs.

According to one embodiment, the cell comprises: three or more lower position switch modules arranged in a respective lower switch position, wherein at least two of the three or more lower position switch modules are in parallel connection and at least two of the three or more lower position switch modules are in series connection. By this, the present cell may advantageously allow for various configurations depending on application. It may also advantageously redirect current in preferred current paths depending on cell configuration.

According to one embodiment, one or more of said switch modules includes a power semiconductor device or includes a plurality of power semiconductor devices in series connection and/or in parallel connection. One or more upper position switch modules in any split cell module may include one power semiconductor device or a plurality of semiconductor devices, which may be arranged in series and/or parallel. One or more lower position switch modules in any split cell module may include one power semiconductor device or a plurality of semiconductor devices, which may be arranged in series and/or parallel. Power semiconductor may include any suitable power semiconductors. As a further option, the bypass switch may include one power semiconductor device or a plurality of semiconductor devices, which may be arranged in series and/or parallel. The bypass switch may include a mechanical bypass switch. As non-limiting examples, power semiconductors may include e.g., SiC MOSFET and SIC IGBT, but other power semiconductors may be used depending on configuration and application.

According to one embodiment, at least one of said first inductor element and said at least a second inductor element is a coupling inductor element, wherein optionally said coupling inductor element is adapted with a busbar design or an air-core design or any other design. Two or more of said first inductor element and said at least a second inductor element may be a coupling inductor element. By coupling inductor element, it may be meant an inductor element which can convert voltage between a primary coil and a secondary coil. The primary coil and the secondary coil may share a commonly used core. The coupling inductor element may e.g., include a gapped magnetic core. The cell may include a resistor in series with the first inductor element. The cell may include a resistor in series with one of the at least second inductor element. The cell may include a respective resistor in series with a plurality of inductive elements of the first inductive element and the at least second inductive element. A first inductive element of a first branch and a second inductive element of a second branch may be inductively coupled. Any two inductive elements of two respective branches of the cell may be inductively coupled.

According to one embodiment, the cell comprises: a bypass switch arranged between the first cell connection terminal and the second cell connection terminal. The bypass switch may include a mechanical bypass switch. The bypass switch may be adapted to disconnect split cell modules in a cell in case of any failure of one or more components of the cell.

According to one embodiment, one or more of the capacitor modules comprises: a plurality of capacitor units in parallel connection and/or in series connection. By this, the cell may be configured with a set of smaller capacitor units which together cooperate to achieve a desired energy storage capability. By providing more smaller capacitor units, a shoot-through current peak may be reduced.

According to a second aspect of the disclosure, a Modular Multilevel Converter, MMC, system is provided. The MMC system comprises: one or more cells according to the first aspect or any embodiments thereof.

According to a third aspect of the disclosure, a method for controlling operation of a cell in a MMC-system is provided. Said cell may be a cell according to the first aspect or any embodiments thereof. The method comprises: modifying a gate voltage or a firing action of one or more switches of one or more split cell modules to modify a current flow through each split cell module, and optionally, monitoring one or more capacitor units in the first branch and the second branch, independently if they are electrically connected to other branches or not, and performing said modifying a gate voltage or a firing action based on this monitoring, and optionally, upon failure of a first upper position switch module in a first branch of the cell, discharging energy in a first capacitor module in the first branch as a shoot-through current, and modifying a gate voltage or a firing action of one or more switches of one or more split cell modules to modify a current flow through each split cell module accordingly.

According to a fourth aspect, a control unit for controlling operation of a cell in a MMC-system is provided. Said cell may be a cell according to the first aspect or any embodiments thereof. The control unit may comprise means for controlling operation of said cell. Said means for controlling operation of said cell may include a processing unit, a memory unit, one or more monitoring means, which are adapted to be able to control a cell of the MMC system in accordance with the method of the third aspect of the disclosure.

According to a fifth aspect of the invention, a computer program is provided. The computer program comprises instructions which, when the program is executed by a computer, cause the computer to carry out the method according to the third aspect or any embodiments thereof.

By computer, it may be meant any device capable of accepting and processing information for some result based on a program, software, or sequence of instructions on how the information is to be processed. The information may be in the form of digitalized data. As non-limiting examples, a computer may be a server, a stationary computing device, a portable computing device.

According to a sixth aspect, a computer-readable medium is provided. The computer readable medium comprises instructions which, when executed by a computer, cause the computer to carry out the method according to the third aspect or any embodiments thereof. The computer-readable medium may be any suitable medium for comprising instructions. The computer-readable medium may be a computer-readable storage medium.

Effects and features of the second, third, fourth, fifth and sixth aspects are largely analogous to those described above in connection with the first aspect. Embodiments mentioned in relation to the first aspect are largely compatible with the second, third, fourth, fifth and sixth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Brief Description of the Drawings

The disclosure will in the following be described in more detail with reference to the enclosed drawings, wherein:

Figs. 1-12 shows schematic illustrations of a cell according to various embodiments of the disclosure;
Figs. 13a-13b show schematic illustrations of module alternatives of a cell according to embodiments of the disclosure;
Figs. 14a-14c show schematic illustrations of inductive elements of a cell according to embodiments of the disclosure;
Fig. 15a-15b show schematic illustrations of a method for controlling a cell according to one embodiment of the disclosure;
Fig. 16 shows a schematic illustration of a Modular Multilevel Converter, MMC, according to one embodiment of the disclosure.

Description of Embodiments

The disclosure will now be described with reference to the attached figures. Features illustrated or described as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

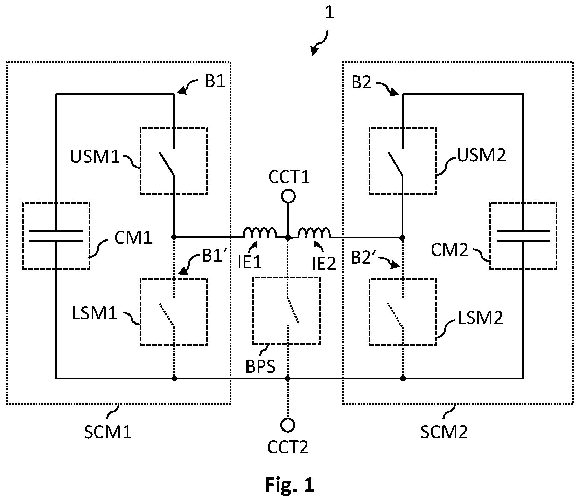

Fig. 1 shows a schematic illustration of a cell 1 according to one embodiment of the disclosure. The cell 1 is adapted for a Modular Multilevel Converter, MMC, system. The cell 1 comprises a first cell connection terminal CCT1. The cell 1 comprises a second cell connection terminal CCT2. The cell 1 comprises a first split cell module SCM1. The cell 1 comprises a second split cell module SCM2. The first split cell module SCM1 and the second split cell module SCM2 are adapted with a half-bridge configuration defining one upper switch position, a lower switch position, and a capacitor position. The first split cell module SCM1 is adapted with a first capacitor module CM1 in a capacitor position and a first upper position switch module USM1 in an upper switch position. The second split cell module SCM2 is adapted with a second capacitor module CM2 in a capacitor position and a second upper position switch module USM2 in an upper switch position. The cell 1 further comprises a first inductive element IE1. The cell 1 further comprises a second inductive element IE2. The cell 1 further comprises a lower position switch module LSM1, LSM2. As exemplified in Fig. 1, the cell 1 may comprise a first lower position switch module LSM1 and a second lower position switch module LSM2.

The first inductive element IE1, the first upper position switch module USM1, and the first capacitor module CM1 are in a first branch B1 between the first cell connection terminal CCT1 and the second cell connection terminal CCT2. As exemplified in Fig. 1, the first inductive element IE1 is connected between the first upper position switch module USM1 and the first cell connection terminal CCT1. The first capacitor module CM1 is connected between the first upper position switch module USM1 and the second cell connection terminal CCT2.

The second inductive element IE2, the second upper position switch module USM2, and the second capacitor module CM2 are in a second branch B2 between the first cell connection terminal CCT2 and the second cell connection terminal CCT2. As exemplified in Fig. 1, the second inductive element IE2 is connected between the second upper position switch module USM2 and the first cell connection terminal CCT2. The second capacitor module CM2 is connected between the second upper position switch module USM2 and the second cell connection terminal CCT2.

The cell 1 may further comprise a bypass switch BPS arranged between the first cell connection terminal CCT1 and the second cell connection terminal CCT2. The bypass switch BPS may be a mechanical bypass switch.

The cell 1 further comprises a lower position switch LSM1, LSM2 arranged in an auxiliary branch B1', B2' in parallel with at least a portion of the first branch B1 and/or the second branch B2. As exemplified in Fig. 1, the cell 1 comprises a first lower position switch module LSM1 in a first auxiliary branch B1' between the first upper position switch module USM1 and the second cell connection terminal CCT2. As exemplified in Fig. 1, the cell 1 may comprise a second position switch module LSM2 in a second auxiliary branch B2' between the second upper position switch module USM2 and the second cell connection terminal CCT2.

Any of the upper switch modules USM1, USM2, and/or any of the lower switch modules LSM1, LSM2 may comprise one switch or two or more switches in series connection and/or parallel connection depending on the number of switches. Any of the capacitor modules CM1, CM2 may comprise one capacitor or two or more capacitors in series connection and/or parallel connection depending on the number of capacitors.

The cell 1 advantageously reduces shoot-through current peak when any of the upper switch modules USM1, USM2 for whatever reason is put in a condition so that the capacitor module in the same branch discharges. However, since the cell 1 is adapted with split cell configuration, even if one capacitor module CM1, CM2 in a first branch B1, B2 discharges, the other capacitor module CM2, CM1 in a second branch B2, B1 will not discharge because the switch module in the second branch B2, B1 prevents current from flowing. Thereby, a shoot-through current peak is reduced. Moreover, the first inductive element IE1 and the second inductive element IE2 contribute to electrical balancing between the first branch B1 and the second branch B2. The first inductive element IE1 and the second inductive element IE2 contribute to slowing down a current change of the shoot-through current, thereby reducing the impact of a shoot-through current on components in the cell 1. As such, since the components have reduced risk of experiencing a detrimental shoot-through current, design requirements can be relaxed, thereby allowing a more cost-effective design for implementation in a MMC-system.

By a component A being "connected to" component B, or similar formulations, it may be meant that component A is directly connected to component B, or that one or more components are arranged in the circuitry path between component A and B. If no other components are arranged between component A and component B, then it may be said that component A is directly connected to component B. It should however be understood that even if component A is directly connected to component B, then there may still be conducting means which connects component A with component B. Moreover, by a component A being "connected between" / "arranged between" a first component B1 and a second component B2 (or similar formulations), it may be meant that the component A is connected directly between component B1 and component B2 or that one or more components are arranged between either component A and component B1 and/or component A and component B2.

Moreover, by upper switch position, lower switch position, and capacitor position, it may refer to particular positions in a half-bridge configuration or a full-bridge configuration, as they are conventionally illustrated. Conventionally, upper switch position is a position of an upper switch, lower switch position is a position of a lower switch, and capacitor position is a position of a capacitor. However, upper switch position / upper position may be replaced by directionless terms such as first switch position / first position or as appropriate. Lower switch position / lower position may be replaced by directionless terms such as second switch position / second position or as appropriate. Capacitor position may be replaced by third position or as appropriate.

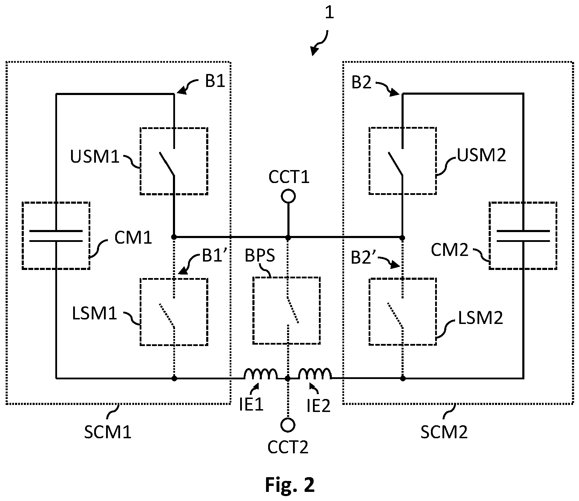

Fig. 2 shows an alternative embodiment to the embodiment illustrated in Fig. 1. The embodiment of Fig. 2 comprises a first inductive element arranged between the second cell connection terminal CCT2 and the first capacitor module CM1. The embodiment of Fig. 2 comprises a second inductive element arranged between the second cell connection terminal CCT2 and the second capacitor module CM2. This arrangement provides an alternative configuration of the inductive elements IE1, IE2, which may also contribute to electrical balancing between the branches B1, B2 and reduce the impact of a shoot-through current on components in the cell 1.

Although not shown, the cell 1 may comprise two inductive elements in the first branch B1 and two inductive elements in the second branch B2. A first inductive element in the first branch B1 may be connected between the first upper position switch module USM1 and the first cell connection terminal CCT1. A second inductive element in the first branch B1 may be connected between the first capacitor module CM1 and the second cell connection terminal CCT2. A first inductive element in the second branch B2 may be connected between the second upper switch module USM2 and the first cell connection terminal CCT1. A second inductive element in the second branch B2 may be connected between the second capacitor module CM2 and the second cell connection terminal CCT2. By incorporating more inductive elements in respective branches B1, B2 of the cell 1, electrical balancing between branches B1, B2 may be improved. Moreover, an impact of shoot-through current peak on the components of the cell 1 may be further reduced, thereby relaxing requirements of the cell components further.

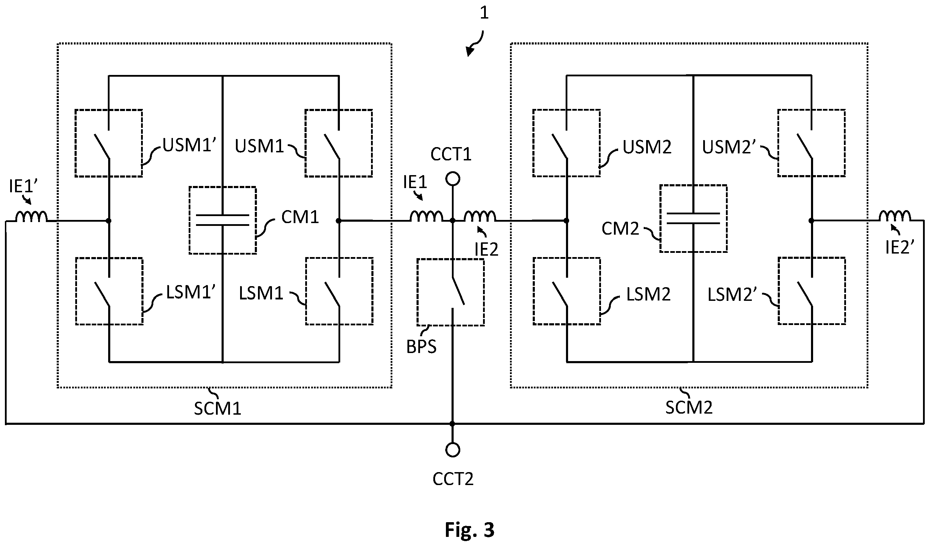

Fig. 3 shows a schematic illustration of a cell 1 according to one embodiment of the disclosure. The first split cell module SCM1 is adapted with a full-bridge configuration defining two upper switch positions and two lower switch positions. The first split cell module SCM1 is adapted with a first upper position switch module USM1 and a second upper position switch module USM1'. The first split cell module SCM1 is adapted with a first lower position switch module LSM1 and a second lower position switch module LSM1'. The first upper position switch module USM1 and the first lower position switch module LSM1 are connected in series in a first switch branch. The second upper position switch module USM1' and the second lower position switch module LSM1' are connected in series in a second switch branch. The first switch branch and the second switch branch are connected in parallel. The first split cell module SCM1 is adapted with a first capacitor module CM1. The first capacitor module CM1 is in parallel with the first switch branch and the second switch branch.

The second split cell module SCM2 is adapted with a full-bridge configuration defining two upper switch positions and two lower switch positions. The second split cell module SCM2 is adapted with a first upper position switch module USM2 and a second upper position switch module USM2'. The second split cell module SCM2 is adapted with a first lower position switch module LSM2 and a second lower position switch module LSM2'. The first upper position switch module USM2 and the first lower position switch module LSM2 are connected in series in a first switch branch. The second upper position switch module USM2' and the second lower position switch module LSM2' are connected in series in a second switch branch. The first switch branch and the second switch branch are connected in parallel. The second split cell module SCM2 is adapted with a first capacitor module CM2. The first capacitor module CM2 is in parallel with the first switch branch and the second switch branch.

The cell 1 exemplified in Fig. 3 may also comprise a bypass switch BPS. The bypass switch BPS is connected between the first cell connection terminal CCT1 and the second cell connection terminal CCT2. Any of the upper switch modules USM1, USM1', USM2, USM2', the lower switch modules LSM1, LSM1', LSM2, LSM2' may comprise one switch or two or more switches in series connection and/or parallel connection depending on the number of switches. Any of the capacitor modules CM1, CM2 may comprise one capacitor or two or more capacitors in series connection and/or parallel connection depending on the number of capacitors. The bypass switch BPS may be a mechanical bypass switch.

The cell 1 is adapted so that the first split cell module SCM1 is in a first branch. The cell 1 is adapted so that the second split cell module SCM2 is in a second branch. The cell 1 further comprises two inductive elements IE1, IE1' in the first branch. One inductive element IE1 is arranged between the first split cell module SCM1 and the first cell connection terminal CCT1. Said one inductive element IE1 is connected to a point between the first upper position switch module USM1 and the first lower position switch module LSM1. One inductive element IE1' is arranged between the first split cell module SCM1 and the second cell connection terminal CCT2. Said one inductive element IE1' is connected to a point between the second upper position switch module USM1' and the second lower position switch module LSM2'. The cell 1 further comprises two inductive elements IE2, IE2' in the second branch. One inductive element IE2 is arranged between the second split cell module SCM2 and the first cell connection terminal CCT2. Said one inductive element IE2 is connected to a point between the first upper position switch module USM2 and the first lower position switch module LSM2. One inductive element IE2' is arranged between the second split cell module SCM2 and the second cell connection terminal CCT2. Said one inductive element IE2' is connected to a point between the second upper position switch module USM2' and the second lower position switch module LSM2'.

The cell 1 adapted with split cell modules in full-bridge configuration can advantageously also reduce shoot-through current by means of the split cell module configuration and the inductive elements IE1, IE1', IE2, IE2'. Moreover, the inductive elements IE1, IE1', IE2, IE2' can also advantageously contribute to electrical balancing between the two branches of the cell.

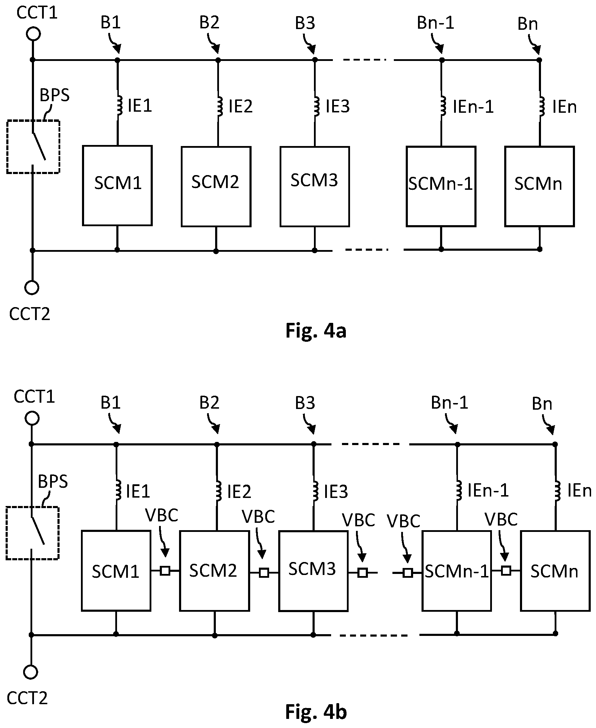

Fig. 4a shows a schematic illustration of a cell comprising n split cell modules, wherein each split cell module SCM1, SCM2, SCM3, SCMn-1, SCMn is in a respective branch B1, B2, B3, Bn-1, Bn between the first cell connection terminal CCT1 and the second cell connection terminal CCT2. The cell 1 comprises a plurality of inductive elements IE1, IE2, IE3, IEn-1, IEn. One inductive element is arranged in each branch. The cell 1 may further comprise a bypass switch BPS arranged between the first cell connection terminal CCT1 and the second cell connection terminal CCT2. The bypass switch BPS may be a mechanical bypass switch. In Fig. 4a, each split cell module SCM1, SCM2, ... SCMn is a split cell module adapted with half-bridge configuration. Any split cell module SCM1, SCM2, ... SCMn may however be adapted with a full-bridge configuration. However, in the case wherein a split cell module is adapted with a full-bridge configuration, then that branch including said split cell module comprises a first inductive element between the split cell module and the first cell connection terminal CCT1 and a second inductive element between the split cell module and the second cell connection terminal CCT2.

The cell 1 may further comprise one or more voltage balancing components VBC arranged between split cell modules SCM1, SCM2, ..., SCMn in parallel branches B1, B2, ... Bn, as exemplified in Fig. 4b. The voltage balancing components VBC may contribute to balancing voltages between branches B1, B2, ... Bn. Any one voltage balancing component VBC may be connected between a positive terminal of a capacitor module of a first split cell module in a first branch and a positive terminal of a capacitor module of a second split cell module in a second branch. The cell may include two or more voltage balancing components VBC arranged between a respective pair of split cell modules. In Fig. 4b, the cell 1 is schematically illustrated with the split cell modules being adapted with half-bridge configuration. Any of the split cell modules may be adapted with a full-bridge configuration, in which case a second inductive element is included in the branch of said split cell module as discussed in reference to Fig. 4a.

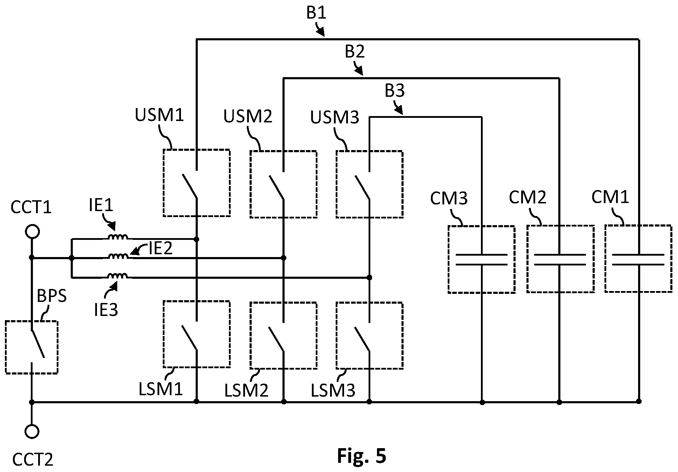

Fig. 5 shows a schematic illustration of a cell 1 according to one embodiment of the disclosure. The cell 1 is adapted with three split cell modules, each defining an upper switch position, a lower switch position and a capacitor position. The cell 1 is adapted to via the split cell modules define three branches B1, B2, B3, between the first cell connection terminal CCT1 and the second cell connection terminal CCT2. A first inductive element IE1, a first upper position switch module USM1, and a first capacitor module CM1 are in a first branch B1. A second inductive element IE2, a second upper position switch module USM2, and a second capacitor module CM2 are in a second branch B2. A third inductive element IE3, a third upper position switch module USM3, and a third capacitor module CM3 are in a third branch B3. The cell 1 is also exemplified as comprising a first lower position switch module LSM1 connected between the first upper position switch module USM1 and the second cell connection terminal CCT2. The cell 1 is also exemplified as comprising a second lower position switch module LSM2 connected between the second upper position switch module USM2 and the second cell connection terminal CCT2. The cell 1 is also exemplified as comprising a third lower position switch module LSM3 connected between the third upper position switch module USM3 and the second cell connection terminal CCT2. The cell 1 is further exemplified as comprising a bypass switch BPS arranged between the first cell connection terminal CCT1 and the second cell connection terminal CCT2.

In the event of a shoot-through current failure, e.g., causing the first capacitor module CM1 to discharge its energy in the form of a shoot-through current, the other two capacitor modules CM2, CM3 will not discharge because the respective upper position switch modules USM2, USM3 preventing it. Thereby, the cell 1 according to the exemplified embodiment advantageously relaxes requirements of the cell components, which thereby can reduce cost and/or allow for more complicated cell configurations without significantly increasing cost.

Any of the upper switch modules USM1, USM2, USM3, the lower switch modules LSM1, LSM2, LSM3 may comprise one switch or two or more switches in series connection and/or parallel connection depending on the number of switches. Any of the capacitor modules CM1, CM2, CM3 may comprise one capacitor or two or more capacitors in series connection and/or parallel connection depending on the number of capacitors. The bypass switch BPS may be a mechanical bypass switch.

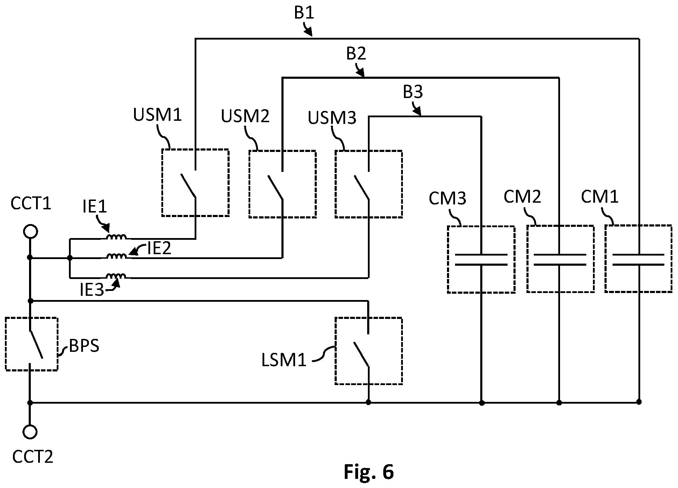

Fig. 6 shows an alternative of the embodiment schematically illustrated in Fig. 5. In the embodiment shown in Fig. 6, the cell 1 comprises one lower position switch LSM1 which connects between the first cell connection terminal CCT1 and the second cell connection terminal CCT2. The plurality of split cell modules may thus share a common lower position switch module LSM1, which may thus save space. When shared by a plurality of split cell modules, the lower position switch module LSM1 may be designed for higher power requirements. The lower position switch module LSM1 may comprise one switch or two or more switches in series connection and/or parallel connection depending on the number of switches.

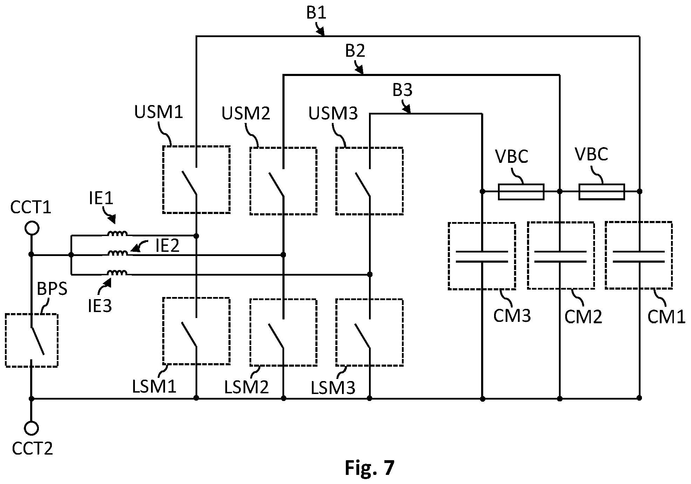

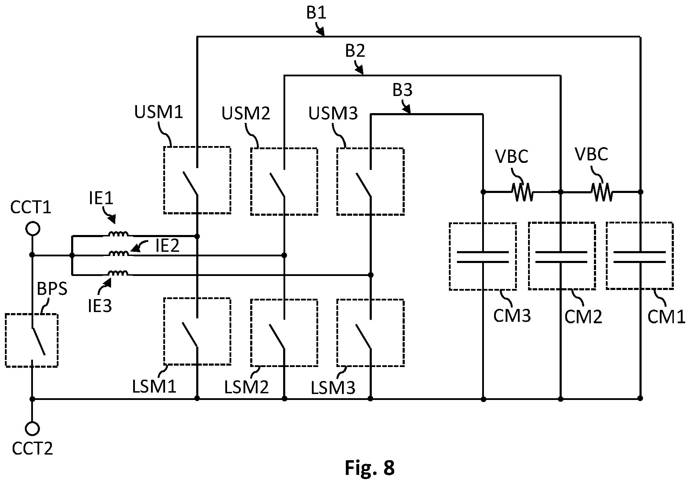

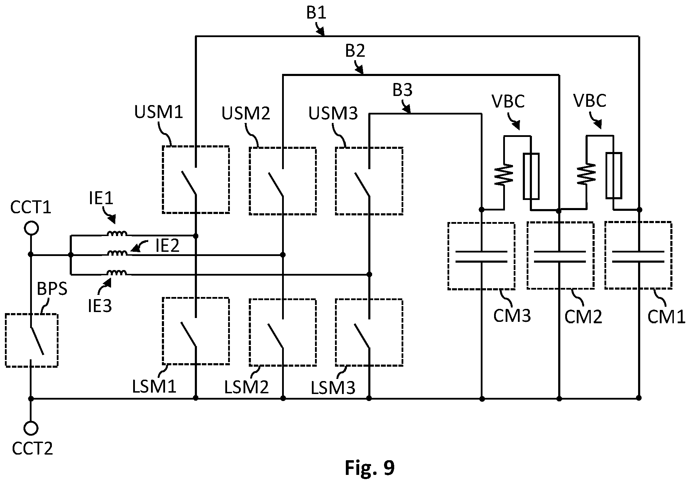

Figs. 7-9 show alternatives to the embodiment schematically illustrated in Fig. 5. In the embodiments shown in Figs. 7-9, the cell 1 comprises two voltage balancing components VBC. A first voltage balancing component VBC is connected between a positive terminal of a first capacitor module CM1 in a first branch B1 and a positive terminal of a second capacitor module CM2 in a second branch B2. A second voltage balancing component VBC is connected between a positive terminal of the second capacitor module CM2 in the second branch B2 and a positive terminal of a third capacitor module CM3 in a third branch B3. The voltage balancing components may include fuses as shown in Fig. 7, or it may include resistors as shown in Fig. 8, or it may include a combination of a resistor and a fuse connected in series as shown in Fig. 9. The voltage balancing components between branches B1, B2, B3 thus allow for voltages to be balanced between the branches B1, B2, B3 as needed.

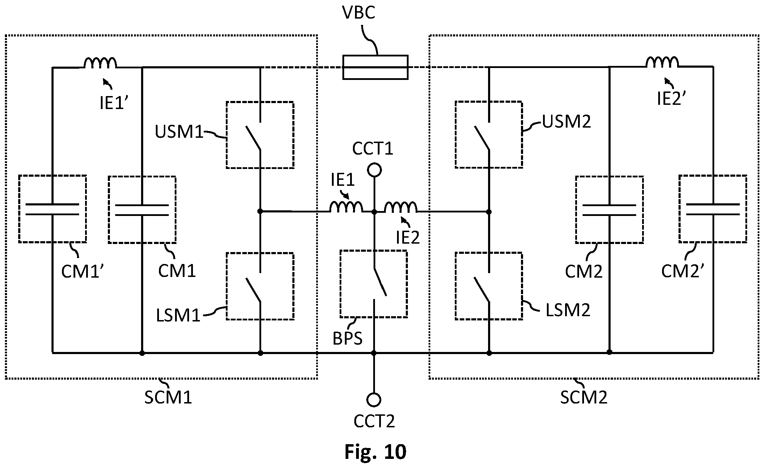

Fig. 10 shows an alternative to the embodiment schematically illustrated in Fig. 1. In the embodiment shown in Fig. 10, the cell comprises split cell modules SCM1, SCM2 which each comprises two parallel cell branches. The first split cell module SCM1 comprises a first cell module CM1 in a first cell branch and a second cell module CM1' in a second cell branch. The first cell branch and the second cell branch of the first split cell module SCM1 are connected in parallel. An inductive element IE1' is arranged between the first cell branch and the second cell branch.

The inductive element IE1' may reduce an impact of a shoot-through current and contribute to an electrical balancing between the first cell branch and the second cell branch. The second split cell module SCM2 comprises a first cell module CM2 in a first cell branch and a second cell module CM2' in a second cell branch. The first cell branch and the second cell branch of the second split cell module SCM2 are connected in parallel. An inductive element IE2' is arranged between the first cell branch and the second cell branch. The inductive element IE2' may reduce an impact of a shoot-through current and contribute to an electrical balancing between the first cell branch and the second cell branch. Any split cell module may be configured with two or more cell branches. An inductive element may be arranged between two cell branches. The cell 1 also comprises a voltage balancing component VBC connected between the first split cell module SCM1 and the second split cell module SCM2. In particular, the voltage balancing component VBC is connected between the first upper position switch module USM1 of the first split cell module SCM1 and the second upper position switch module USM2 of the second split cell module SCM2.

The voltage balancing component VBC may balance voltage between parallel branches of the cell. The voltage balancing component VBC may include a fuse, a resistor, or a fuse in series with the resistor.

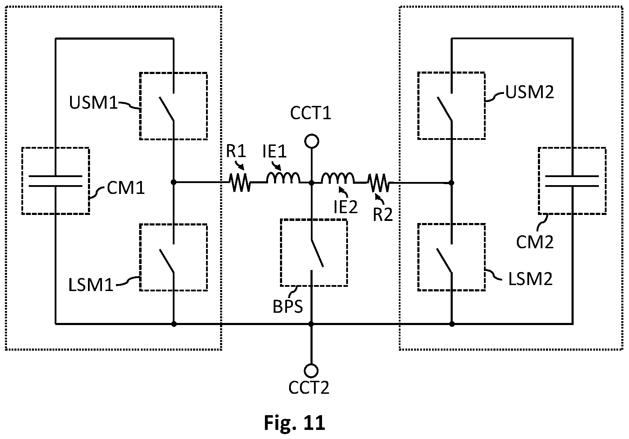

Fig. 11 shows an alternative embodiment of the embodiment schematically illustrated in Fig. 1. In the embodiment of Fig. 11, the cell comprises a first resistor R1 connected between the first upper position switch module USM1 of the first split cell module SCM1 and the first inductive element IE1. The cell comprises a second resistor R2 connected between the second upper position switch module USM2 of the second split cell module SCM2 and the second inductive element IE2. The resistors R1, R2 may contribute to electrical balancing in the cell.

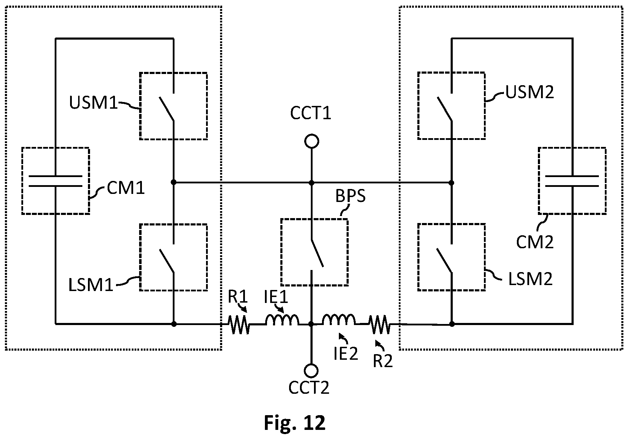

Fig. 12 shows an alternative embodiment of the embodiment schematically illustrated in Fig. 2. In the embodiment of Fig. 12, the cell comprises a first resistor R1 connected between the first capacitor module CM1 of the first split cell module SCM1 and the first inductive element IE1. The cell comprises a second resistor R2 connected between the second capacitor module CM2 of the second split cell module SCM2 and the second inductive element IE2. The resistors R1, R2 may contribute to electrical balancing in the cell.

Although not shown, a cell may be adapted with four inductive elements and four resistors, wherein two inductive elements and two resistors are arranged as in Fig. 11 and two inductive elements and two resistors are arranged as in Fig. 12.

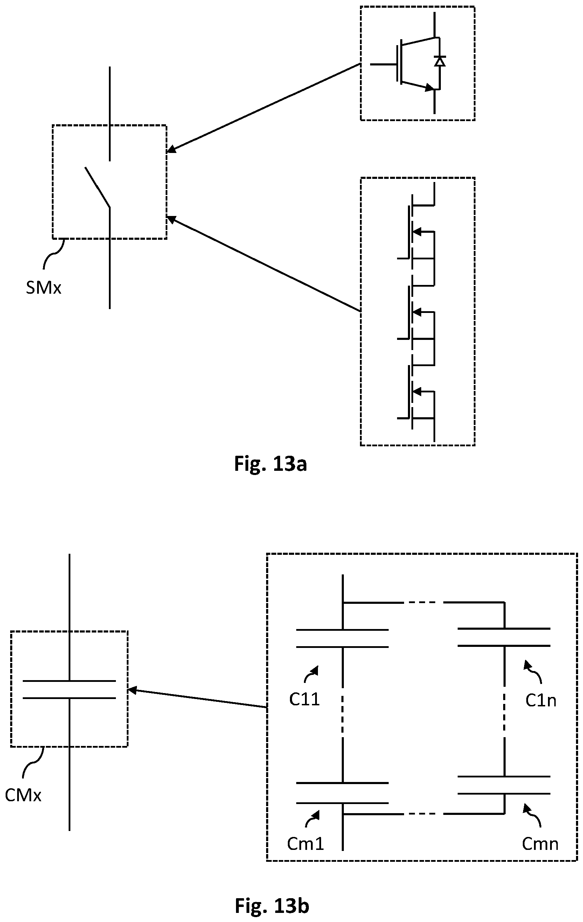

Fig. 13a illustrate that any switch module SMx, such an any upper position switch module USMx, any lower position switch module LSMx, or any bypass switch, may include one switch or a plurality of switches. A switch may for instance be a power semiconductor device. Power semiconductor device may include any suitable power semiconductor devices. As a further option, the bypass switch may include one power semiconductor device or a plurality of semiconductor devices, which may be arranged in series and/or parallel. The bypass switch may include a mechanical bypass switch. As non-limiting examples, power semiconductor devices may include e.g., SiC MOSFET and SIC IGBT, but other power semiconductor devices may be used depending on configuration and application.

Fig. 13b illustrate that any capacitor module CMx may include one capacitor or a plurality of capacitor. The plurality of capacitors may include capacitors connected in parallel and/or connected in series. As shown in Fig. 13b, a capacitor module may include any number of n cell branches, such as 1 cell branch, 2 cell branches, or more. Each cell branch may include one capacitor or any number m of capacitors connected in series. Moreover, a cell module may include any configuration of series connected and/or parallel connected capacitors. For instance, one cell branch may include one capacitor connected in series with two capacitors connected in parallel.

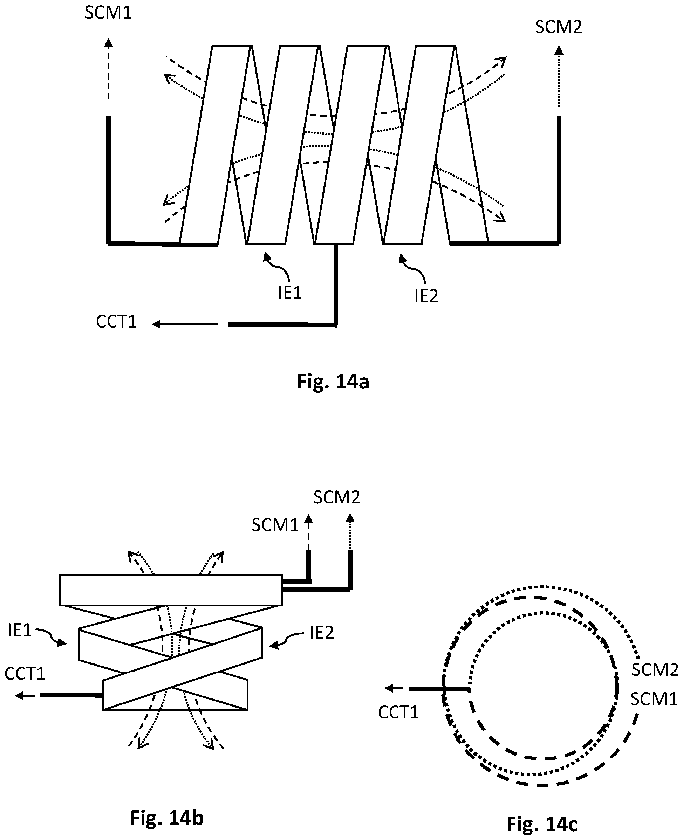

Fig. 14a shows one coil element providing the first inductive element IE1 and the second inductive element IE2. The coil element is adapted for being connected between the first split cell module SCM1 and the second split cell module SCM2. The coil element may be connected to the first cell connection terminal CCT1, or as an alternative, the coil element may be connected to second cell connection terminal, depending on how the cell element is connected to the first split cell module SCM1 and the second split cell module SCM2. Moreover, the coil element may be adapted with an air-core design but is not limited to such designs.

Fig. 14b shows one alternative coil element providing the first inductive element IE1 and the second inductive element IE2. The coil element is adapted for being connected between the first split cell module SCM1 and the second split cell module SCM2. The coil element may be connected to the first cell connection terminal CCT1, or as an alternative, the coil element may be connected to second cell connection terminal, depending on how the cell element is connected to the first split cell module SCM1 and the second split cell module SCM2.

Moreover, the coil element may be adapted with an air-core design but is not limited to such designs.

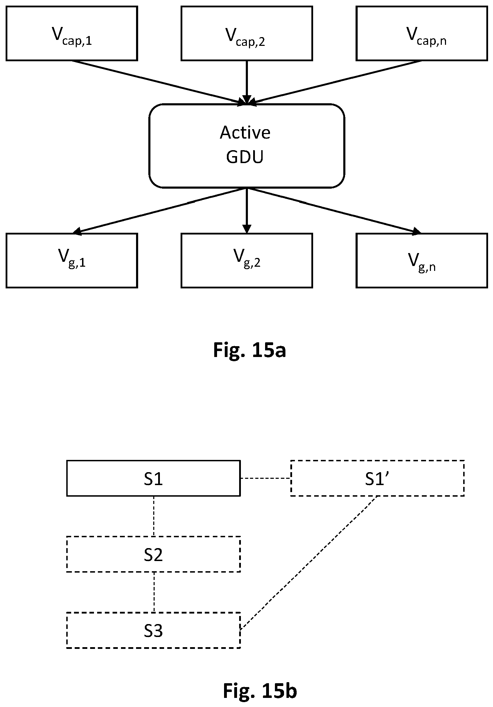

Fig. 15a shows a flow chart of active gate driver input and output. As explained above, the cell comprises two or more split cell module with one or more capacitors in a respective branch. Each capacitor may be adapted to store a capacitor voltage Vcap,1 ... Vcap,n. The cell may be controlled by means of a control unit. The control unit may include a gate driver unit. As input to a gate driver unit, capacitor voltages Vcap,1 ... Vcap,n may be used. The gate driver unit may, based on said capacitor voltages as input, output corresponding gate voltages to one or more power semiconductor devices in switch modules of the cell adapted with split cell configuration. Thereby, capacitor voltages of capacitors in same branch can be controlled.

One or more power semiconductor devices may include insulated-gate bipolar transistor, IGBT. The IGBT is a power semiconductor device primarily forming an electronic switch, which is developed to combine high efficiency with fast switching. The IGBT provides three terminals: the emitter, E; the gate, G; and the collector, C. The IGBT working principle is ON or OFF by either activating or deactivating its gate terminal. This is done by applying a voltage matching or exceeding a threshold value. For gate voltages above the threshold value, the IGBT enters into conducting mode, and for gate voltages not above the threshold value, the IGBT does not enter in conducting mode. In conducting mode, for gate voltages increasingly exceeding the threshold value, the slope $V_{CE}$ vs $I_c$, i.e., the equivalent $r_{CE}$, is reduced. When several IGBTs are in parallel, slight variations of $r_{CE}$ would considerably modify the current distribution, allowing to regulate the current sharing. When in reverse conduction, a diode connected between emitter and collector is conducting, and higher gate voltages would increase the voltage drop of the diode, which, similar than before, can be used to modify the current distribution between split cell modules. This mechanism can be either used to equalize current and be performed in a local manner (no need to communicate with the master controller), or be used to fulfil other control objectives.

One control objective can be thermal equalization as, in the event of unequal equivalent thermal resistance of some modules, some modules can be thermically stressed more than others even under equal current conditions, which would lead to different life-time of the modules. Consequently, unequal current distribution controlled through gate voltage control could lead to better remaining useful time of cell with split cell configuration.

Fig. 15b illustrates a method of controlling a cell for an MMC according to the disclosure. The cell is a cell according to the first aspect or any embodiments thereof. The method comprises: modifying S1 a gate voltage Vg or a firing action of one or more switches of one or more split cell modules SCM1, SCM2 to modify a current flow through each split cell module SCM1, SCM2. According to one optional embodiment, the method may include monitoring S2 one or more capacitor units in the first branch and the second branch, independently if they are electrically connected to other branches or not, and performing said modifying S1 a gate voltage or a firing action based on this monitoring. According to one optional embodiment, the method may include, upon failure of a first upper position switch module USM1, USM1 in a first branch B1 of the cell 1, discharging S3 energy in a first capacitor module CM1 in the first branch B1 as a shoot-through current, and modifying S1' a gate voltage Vg or a firing action of one or more switches of one or more split cell modules SCM1, SCM2 to modify a current flow through each split cell module SCM1, SCM2 accordingly.

The method may be applied to control a cell with two or more split cell modules as herein detailed. The method may involve controlling a gate voltage of one or more switches in one or more switch modules in the cell. The method may thus control a cell irrespective of number of split cell modules or branches a cell as herein detailed includes.

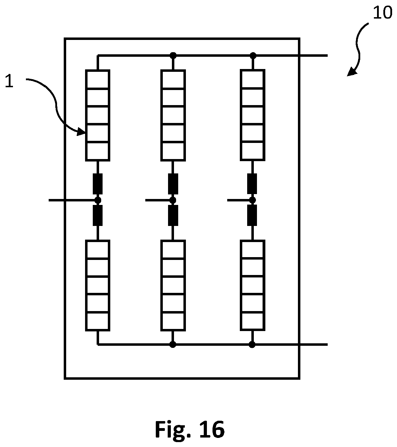

Fig. 16 shows a Modular Multilevel Converter, MMC, according to one embodiment of the invention. The MMC comprises one or more cells 1 according to the first aspect or any embodiments thereof. The MMC may comprise any number of cells and not only the number indicated in Fig. 16.

While the foregoing is directed to embodiments of the disclosure, other and further embodiments may be devised without parting from the inventive concept discussed herein. As an example, while the cell has been detailed in reference to Figs. 1-2 to include two split cell modules adapted with half-bridge configuration, the cell may include inductive elements as arranged in either Figs. 1-2 and one or more split cell modules in full-bridge configuration. Moreover, while a number of Figs. also illustrate the invention with only two branches or three branches, these embodiments may be adapted to include any number of at least two branches. Therefore, it should be understood that Figs. exemplify various embodiments of the invention and do as such not limit the invention to any particular embodiment, either detailed in the specification or shown in Figures. The scope of the invention is however determined by the claims.

**Claims**

1. A cell (1) for a Modular Multilevel Converter, MMC, system, the cell (1) comprising:

    - a first cell connection terminal (CCT1);
    - a second cell connection terminal (CCT2);
    - a first split cell module (SCM1) and at least a second split cell module (SCM2), the first split cell module (SCM1) and the at least a second split cell module (SCM2) adapted with a half-bridge configuration or a full-bridge configuration defining one or more upper switch positions, one or more lower switch positions, and one or more capacitor positions,
- the first split cell module (SCM1) adapted with a first capacitor module (CM1) in a capacitor position and a first upper position switch module (USM1) in an upper switch position;
- one or more of said at least a second split cell module (SCM2) adapted with a second capacitor module (CM2) in a capacitor position and a second upper position switch module (USM2) in an upper switch position,
the cell (1) further comprising:
- at least one first inductive element (IE1);
- at least one second inductive element (IE2);
- a lower position switch module (LSM1, LSM2), wherein
- the at least one first inductive element (IE1), the first upper position switch module (USM1), and the first capacitor module (CM1) are in a first branch (B1) between the first cell connection terminal (CCT1) and the second cell connection terminal (CCT2),
- one or more of the at least one second inductive element (IE2), the second upper position switch module (USM2), and the second capacitor module (CM2) are in a second branch (B2) between the first cell connection terminal (CCT1) and the second cell connection terminal (CCT2),
- the lower position switch module (LSM1, LSM2) is arranged in an auxiliary branch (B1', B2') in parallel with at least a portion of the first branch (B1) and/or the second branch (B2).

2. The cell (1) according to claim 1, wherein

- the first inductive element (IE1) is arranged between the first cell connection terminal (CCT1) and the first upper position switch module (USM1), and one of the at least one second inductive element (IE2) is arranged between the first cell connection terminal (CCT1) and the second upper position switch module (USM2), and/or
- the first inductive element (IE1) is arranged between the second cell connection terminal (CCT2) and the first capacitor module (CM1) and one of the at least one second inductive element (IE2) is arranged between the second cell connection terminal (CCT2) and the second capacitor module (CM2).

3. The cell (1) according to any preceding claims, wherein the first split cell module (SCM1) and/or the at least second split cell module (SCM2) comprises two or more switch modules (USM1, USM1', LSM1, LSM1'; USM2, USM2', LSM2, LSM2') in a half-bridge configuration or a full-bridge configuration with at least one switch module (USM1, USM1'; USM2, USM2') in a upper switch position and with at least one switch module (LSM1, LSM1'; LSM2, LSM2') in a lower switch position.

4. The cell (1) according to any preceding claims, comprising: a voltage balancing component (VBC) connected between the first split cell module (SCM1) and one of the at least second split cell module (SCM2).

5. The cell (1) according to claim 4, wherein said voltage balancing component (VBC) includes one of a resistor, a fuse, or a combination thereof.

6. The cell (1) according to any preceding claims, comprising: an auxiliary inductive element (IE1', IE2') connected between two parallel capacitor modules (CM1', CM1; CM2', CM2) in the same split cell module (SCM1, SCM2).

7. The cell (1) according to any preceding claims, comprising: at least a third split cell module (SCM3), each adapted with a capacitor module (CM3) in a capacitor position and an upper position switch module (USM3), at least a third inductive element (IE3), wherein the at least third inductive element (IE3), the third upper position switch module (USM3), and the at least third capacitor module (CM3) are in a third branch (B3) between the first cell connection terminal (CCT1) and the second cell connection terminal (CCT2).

8. The cell (1) according to any preceding claims, further comprising at least a second lower position switch module (LSM2) arranged in a lower switch position, wherein the first lower position switch module (LSM1) and the at least a second lower position switch module (LSM2) are in series connection or in parallel connection.

9. The cell (1) according to any preceding claims, further comprising three or more lower position switch modules (LSM1, LSM2, LSM3) arranged in a respective lower switch position, wherein at least two of the three or more lower position switch modules (LSM1, LSM2, LSM3) are in parallel connection and at least two of the three or more lower position switch modules are in series connection.

10. The cell (1) according to any preceding claims, wherein one or more of said switch modules (SMx, USM1, USM2, USM3, LSM1, LSM2, LSM3) includes one or more power semiconductor device or a plurality of power semiconductor devices in series connection and/or in parallel connection.

11. The cell (1) according to any preceding claims, wherein at least one of said first inductor element (IE1) and said second inductor element (IE2) is a coupling inductor element, wherein optionally said coupling inductor element (IE1, IE2) is adapted with a busbar design or an air-core design or any other design.

12. The cell (1) according to any preceding claims, further comprising a bypass switch (BPS) arranged between the first cell connection terminal (CCT1) and the second cell connection terminal (CCT2).

13. The cell (1) according to any preceding claims, wherein one or more of the capacitor modules (CMx, CM1, CM2, CM3) comprises a plurality of capacitor units (C11, Cm1, C1n, Cmn) in parallel connection and/or in series connection.

14. A Modular Multilevel Converter, MMC, system, comprising:

   - one or more cells (1) according to any of the preceding claims.

15. Method for controlling operation of a cell in a MMC-system, wherein said cell (1) is a cell (1) according to any of claims 1-13, the method comprising:

   - modifying (S1) a gate voltage (Vg) or a firing action of one or more switches of one or more split cell modules (SCM1, SCM2) to modify a current flow through each split cell module (SCM1, SCM2), and
   - optionally, monitoring (S2) one or more capacitor units in the first branch and the second branch, independently if they are electrically connected to other branches or not, and performing said modifying a gate voltage or a firing action based on this monitoring,
   - optionally, upon failure of a first upper position switch module (USM1, USM2) in a first branch (B1) of the cell (1), discharging (S3) energy in a first capacitor module (CM1) in the first branch (B1) as a shoot-through current, and modifying (S1') a gate voltage (Vg) or a firing action of one or more switches of one or more split cell modules (SCM1, SCM2) to modify a current flow through each split cell module (SCM1, SCM2) accordingly.

**Fig. 1**

Fig. 2

**Fig. 3**

**Fig. 4a**

**Fig. 4b**

Fig. 5

Fig. 6

Fig. 7

**Fig. 8**

EP 4 586 482 A1

Fig. 9

**Fig. 10**

Fig. 11

Fig. 12

**Fig. 13a**

**Fig. 13b**

SCM1

SCM2

IE1

IE2

CCT1

**Fig. 14a**

SCM2

SCM1

IE1

IE2

CCT1

**Fig. 14b**

CCT1

SCM2

SCM1

**Fig. 14c**

**Fig. 15a**

**Fig. 15b**

**Fig. 16**

Europäisches Patentamt
European Patent Office
Office européen des brevets

Application Number

EP 24 15 1171

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/233758 A1 (ECKEL HANS-GUENTER [DE]) 11 August 2016 (2016-08-11) <br> * paragraph [0006]; figure 6 * <br> * paragraph [0008] * <br> * paragraph [0011] * <br> * paragraph [0014] - paragraph [0015] * <br> * paragraph [0024] * <br> * paragraph [0066] - paragraph [0067] * | 1-15 | INV. <br> H02M1/32 <br> H02M7/483 <br><br> ADD. <br> H02M1/00 |
| X | US 2013/026841 A1 (HOSINI FALAH [SE] ET AL) 31 January 2013 (2013-01-31) <br><br> * figure 6 * | 1-3, 6-10, 13-15 | |
| A | EP 3 621 191 A1 (ABB SCHWEIZ AG [CH]) 11 March 2020 (2020-03-11) <br> * paragraph [0028] * | 7 | |
| A | US 2023/246562 A1 (MOHANAVEERAMANI ARAVIND [SE] ET AL) 3 August 2023 (2023-08-03) <br> * paragraph [0016] * <br> * paragraph [0052] * | 1-15 | TECHNICAL FIELDS SEARCHED (IPC) <br><br> H02M |
| A | WO 2022/037783 A1 (HITACHI ENERGY SWITZERLAND AG [CH]) 24 February 2022 (2022-02-24) <br> * paragraph [0006] * | 12 | |

The present search report has been drawn up for all claims

| Place of search | Date of completion of the search | Examiner |
|---|---|---|
| The Hague | 29 May 2024 | Magnanimo, Antonio |

## ANNEX TO THE EUROPEAN SEARCH REPORT
## ON EUROPEAN PATENT APPLICATION NO.

EP 24 15 1171

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | Publication date | Patent family member(s) | | Publication date |
|---|---|---|---|---|
| US 2016233758 A1 | 11-08-2016 | CN | 105580257 A | 11-05-2016 |
| | | DE | 102013219466 A1 | 26-03-2015 |
| | | EP | 3036823 A1 | 29-06-2016 |
| | | JP | 6336050 B2 | 06-06-2018 |
| | | JP | 2016532412 A | 13-10-2016 |
| | | KR | 20160046906 A | 29-04-2016 |
| | | RU | 2016116013 A | 31-10-2017 |
| | | US | 2016233758 A1 | 11-08-2016 |
| | | WO | 2015043933 A1 | 02-04-2015 |
| US 2013026841 A1 | 31-01-2013 | AU | 2010349377 A1 | 04-10-2012 |
| | | BR | 112012023820 A2 | 02-08-2016 |
| | | CA | 2793475 A1 | 29-09-2011 |
| | | CN | 102835018 A | 19-12-2012 |
| | | EP | 2567455 A1 | 13-03-2013 |
| | | KR | 20120130274 A | 29-11-2012 |
| | | US | 2013026841 A1 | 31-01-2013 |
| | | WO | 2011116816 A1 | 29-09-2011 |
| EP 3621191 A1 | 11-03-2020 | NONE | | |
| US 2023246562 A1 | 03-08-2023 | CN | 115516747 A | 23-12-2022 |
| | | EP | 4165763 A1 | 19-04-2023 |
| | | US | 2023246562 A1 | 03-08-2023 |
| | | WO | 2021249656 A1 | 16-12-2021 |
| WO 2022037783 A1 | 24-02-2022 | NONE | | |

EPO FORM P0459

For more details about this annex : see Official Journal of the European Patent Office, No. 12/82